Europäisches Patentamt

European Patent Office

Office européen des brevets

(11) Publication number: **0 090 532**
**A1**

# EUROPEAN PATENT APPLICATION

(21) Application number: **83301353.5**

(22) Date of filing: **11.03.83**

(51) Int. Cl.³: **G 05 B 19/42**

(30) Priority: **24.03.82 JP 45531/82**

(43) Date of publication of application: **05.10.83**
**Bulletin 83/40**

(84) Designated Contracting States: **CH DE FR GB LI**

(71) Applicant: **Fanuc Ltd, 5-1, Asahigaoka, 3-chome, Hino-shi, Tokyo 191 (JP)**

(72) Inventor: **Kurakake, Mitsuo, Izumi-haitsu 103 3-3-10, Tamadaira, Hino-shi Tokyo (JP)**

(74) Representative: **Allman, Peter John et al, Marks and Clerk Scottish Life House Bridge Street, Manchester M3 3DP (GB)**

(54) **A composite NC input/output equipment.**

(57) A composite numerical control (NC) input/output equipment having therein a first functional unit for punching a paper tape to record NC data therein, a second functional unit for reading the punched data from an NC tape, and a third functional unit for printing out the NC data on a printing sheet for preservation purposes. The first to third functional units are integrally accommodated in a single assembly unit connectable with other associated equipment by means of an interface cable.

EP 0 090 532 A1

0090532

## A COMPOSITE NC INPUT/OUTPUT EQUIPMENT

BACKGROUND OF THE INVENTION

Field of the Invention

The present invention relates to a composite numerical control (NC) input/output (I/O) equipment used for I/O operations of NC data in automatically machining workpieces by NC machine tools.

Description of the Prior Art

In automatic NC machining of workpieces, the workpieces are machined and finished to desired dimensions and shapes by NC machine tools. The operation of the NC machine tools is conventionally controlled by NC controllers which read NC data recorded in NC tapes prepared beforehand on the basis of design dimensions and shape, the material of the workpieces, and diverse machining conditions. Accordingly, various I/O equipment are conventionally necessary for preparation of NC tapes, for reading NC data recorded or punched in NC tapes, and for printing NC data on sheets for preservation purposes.

Typical conventional I/O equipment are NC tape punchers, used in combination with automatic NC programming devices, which have been remarkably improved in recent years; tape readers, used connected to NC controllers when an NC machining process is carried out; and printers, used in combination with tape readers for NC data preservation purposes. That is, different I/O equipment are used in different processes.

SUMMARY OF THE INVENTION

The object of the present invention is therefore to provide a composite NC I/O equipment formed as an integrated unit having the above-mentioned tape preparing, tape punching, tape reading, and printing functions.

Another object of the present invention is to provide a composite NC I/O equipment which is portable and is capable of being generally used for tape preparation, NC machining processes, and NC data preservation not only at NC tape preparation sites, but also at NC machining workshops.

In accordance with the present invention, there is provided a composite NC I/O equipment which comprises a first functional unit for punching a paper tape, thereby recording Nc data therein, a second functional unit for reading the punched NC data from the paper tape, and a third functional unit for printing out the NC data. The first to third functional units are integrally accommodated in a single assembly unit so as to form a composite NC I/O equipment. The equipment is connectable to other associated equipment by means of a single interface cable.

BRIEF DESCRIPTION OF THE DRAWINGS

The present invention will be made more apparent from the ensuing description of an embodiment with reference to the accompanying drawings, wherein:

Fig. 1 is a perspective view of a composite NC I/O equipment according to an embodiment of the present invention; and

Fig. 2 is a schematic block diagram of the composite NC I/O equipment of Fig. 1, illustrating the electrical interconnection of the component functional units and the electrical connection to external equipment.

DESCRIPTION OF THE PREFERRED EMBODIMENT

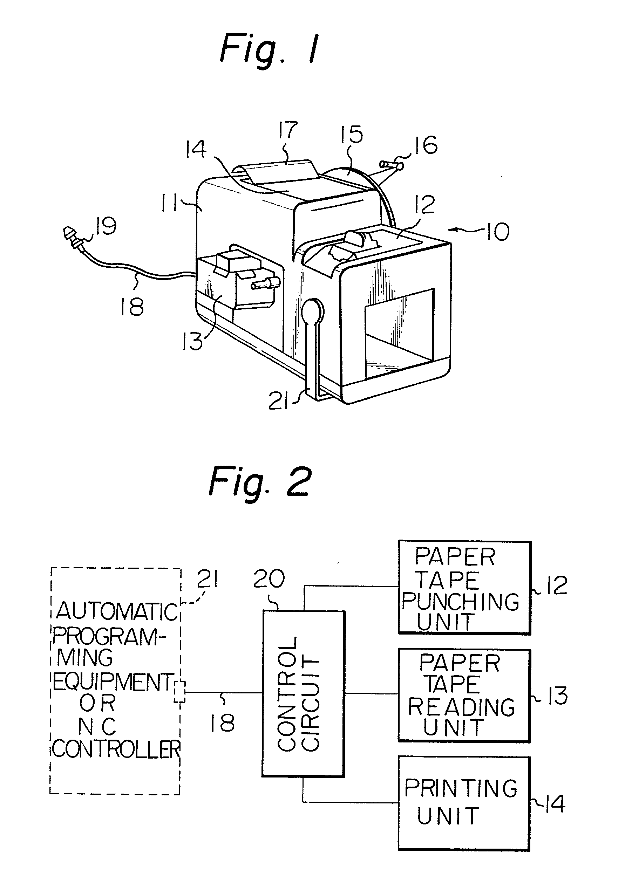

Figure 1 is a perspective view of a composite I/O equipment according to the present invention, illustrating the external form thereof. Referring to Fig. 1, the composite NC I/O equipment 10 is formed generally in a compact box-shaped assembly unit 11. A tape punching unit 12, a tape reading unit 13, and a printing unit 14 are built in the box-shaped assembly unit 11.

As a paper tape 15 rolled on a suitable reel is fed to the tape punching unit 12 through a guide roller mechanism 16, the tape punching unit 12 punches the paper tape 15 to record NC data therein. When a punched tape is fed to the tape reading unit 13, the NC data for controlling the corresponding NC machining operation is read sequentially.

In the printing unit 14, a built-in printing mechanism prints out the NC data, for example, the NC data read by the tape reading unit 13, on a printing sheet 17.

The I/O equipment 10, comprising those three functional units 12, 13, and 14 built in the box-shaped assembly unit 11, is provided with a single interface cable 18. The box-shaped assembly unit 11 can be connected to other associated equipment by plugging the plug 19 of the interface cable 18 in the socket of the other associated equipment. Connection of the box-shaped assembly unit 11 to an NC controller makes the control of a machine tool for NC machining practicable, while the connection of the box-shaped assembly unit 11 to an automatic NC programming device enables easy preparation of NC tape.

Furthermore, as described above, the NC data punched in an NC tape can be printed and recorded on a sheet to preserve the data by internally interconnecting the tape reading unit 13 and the printing unit 14, each disposed within the I/O equipment 10.

Figure 2 is a schematic block diagram of the electrical interconnection of the tape punching unit 12, the tape reading unit 13, the printing unit 14, and the interface cable 18 within the composite NC I/O equipment 10. As shown in Fig. 2, the composite NC I/O equipment 10 is provided with a control circuit 20. The control circuit 20 controls the connection of the functional units 12, 13, and 14 to an external equipment 21, e.g., an NC controller or an automatic programming device, through the interface cable 18 as well as the interconnection between the functional units 12, 13, and 14.

Application of recent advanced integrated circuit (IC) technology makes possible forming all the necessary control functions in a single or a suitable number of printed circuit boards. Simultaneous and individual operation or mutual operation of two or three of those functional units 12, 13, and 14 included within a single box-shaped assembly unit 11, makes possible, for example, simultaneously preparation of an NC tape and printing and recording the NC data being punched in the NC tape. Thus, the composite NC I/O equipment 10, through compactly formed, offers functionally increased performance.

Since the composite NC I/O equipment 10 can be connected to an NC controller or to an automatic NC programming device by means of a single interface cable 18, the cost of the system is reduced through the reduction of the number and the total length of the connecting cables and wires. At the same time, the external appearance of the composite NC I/O equipment 10 can be made more aesthetic.

Since the composite NC I/O equipment 10 is provided with a grip 21 (Fig. 1), the composite NC I/O equipment 10 can readily be used in combination with a plurality of other equipment at an NC machining workshop or at an NC tape preparation site.

The composite NC I/O equipment 10 according to the present invention is also capable of exhibiting what is called intelligent function of adding TV errors to a tape which has not been subjected to TV check or of executing the TV error check of the data read by the tape reading unit 13 in addition to above-mentioned on-line function, in which the composite NC I/O equipment 10 is used in connection with an automatic programming device or an NC controller, when used individually in an off-line mode.

- 5 -

0090532

## CLAIMS

1. A composite numerical control (NC) input/output equipment comprising a first functional unit for punching a paper tape, thereby recording NC data therein;

a second functional unit for reading the punched NC data from a paper tape;

a third functional unit for printing out the NC data on a printing sheet;

a single assembly unit in which said first through third functional units are integrally accommodated; and

a single interface cable arranged so as to connect said composite NC input/output equipment to other associated equipment.

2. A composite NC input/output equipment according to claim 1, further comprising a grip means provided for said assembly unit, thereby making said composite NC input/output equipment portable.

3. A composite NC input/output equipment according to claim 1, further comprising a control circuit means which interconnects said first through third functional units, thereby providing an intelligent function for said input/output equipment.

## Fig. 1

## Fig. 2

# EUROPEAN SEARCH REPORT

European Patent Office

0090532

Application number

EP 83 30 1353

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | US-A-4 150 427 (HOUDAILLE INDUSTRIES, INC.)<br>* Page 3, lines 1-26, 34-45; figure 86 * | 1,3 | G 05 B 19/42 |
| Y | GB-A-1 199 510 (BOEHRINGER GmbH)<br>* Page 2, lines 11-29; page 4, lines 72-88; figure 2 * | 1,3 | |
| Y | FR-A-2 333 288 (CIT-ALCATEL)<br>* Page 2, lines 24-28; page 3, lines 23-27, 37-40; page 4, lines 1-5; figure 1 * | 1,3 | |
| A | US-A-4 010 356 (DO ALL COMPANY)<br>* Abstract * | 1,3 | TECHNICAL FIELDS SEARCHED (Int. Cl. 3) |
| A | EP-A-0 042 749 (FANUC LTD.)<br>* Portable box no. 12 in figure 1 * | 2 | G 05 B 19/42<br>G 05 B 19/405 |

The present search report has been drawn up for all claims

| Place of search | Date of completion of the search | Examiner |
|---|---|---|
| THE HAGUE | 29-06-1983 | RESSENAAR J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82